# EUROPÄISCHE PATENTSCHRIFT

(11) **EP 1 037 347 B1**
(45) Veröffentlichungstag und Bekanntmachung des Hinweises auf die Patenterteilung: **12.05.2010**
(21) Anmeldenummer: 00104870.1
(22) Anmeldetag: 07.03.2000
(51) Int. Cl.: H02B 1/052

(54) **Schnellbefestigung zum Aufschnappen eines elektrischen Installationsgerätes auf eine Hutprofiltragschiene**
Snap mounting for an electrical intallation apparatus on a DIN rail
Fixation rapide à encliquetage d'un appareil d'installation électrique sur un rail DIN

(30) Priorität: 18.03.1999 DE 19912125
(43) Veröffentlichungstag der Anmeldung: 20.09.2000
(73) Patentinhaber: ABB AG, 68309 Mannheim (DE)
(72) Erfinder: Muders, Erwin, Dipl.-Ing., 69126 Heidelberg (DE)

(56) Entgegenhaltungen:
- DE-C- 19 548 335
- US-A- 5 598 322

## Beschreibung

Die Erfindung betrifft eine Schnellbefestigung zum Aufschnappen eines elektrischen Installationsgerätes auf eine Hutprofiltragschiene gemäß dem Oberbegriff des Anspruches 1.

Solche Schnellbefestigungen sind an der Bodenseite eines elektrischen Installationsgerätes vorgesehen, wobei das Installationsgerät an seiner Befestigungsfläche eine U-förmige Ausnehmung aufweist, an deren einen Seitenwand eine feststehende Nase und an deren anderer Seitenwand eine an einem Schieber angeordnete Nase vorgesehen sind, die aufeinanderzugerichtet sind, wobei der Schieber gegen den Druck einer Feder nach innen gedrückt wird und so die an ihm angeformte, sog. bewegliche Nase nach innen in die Ausnehmung hineindrückt. Zur Befestigung des Installationsgerätes an einer Hutprofiltragschiene wird eine der Längskanten der Hutprofiltragschiene hinter die feststehende Nase gedrückt und durch Verschwenken des Installationsgerätes um diese Kante die andere Kante hinter die bewegbare Nase gerastet.

Bei einem Leitungsschutzschalter ist ein solcher Schieber bekannt, der als Metallteil ausgebildet ist und unter dem Druck einer Schraubendruckfeder nach innen gedrückt wird. Zur Demontage wird der Schieber entgegen dem Druck der Feder von der Kante der Hutprofiltragschiene abgezogen, so dass das Installationsgerät von der Hutprofiltragschiene entfernt werden kann.

Aus der DE 30 02 589 A1 ist ein Schieber bekannt geworden, der zwei parallele Längsstege zwischen der Nase und dem entgegengesetzten, zum Angriff eines Werkzeuges geeigneten Ende aufweist, an deren inneren Längskanten Arme angeformt sind, die jeweils den anderen Längssteg überragen und in Ausnehmungen am Gehäuse eingreifen. Damit dienen die Arme als Federn, die den Schieber gegen die Hutprofiltragschiene drücken. Wenn sich in die Arme verformen, verformen sich auch die Längsstege, was zu einem Verklemmen des Schiebers im Gehäuse des Installationsgerätes führen kann. Außerdem sind die Längsstege in unterschiedlichen Ebenen angeordnet, wodurch der Schieber mit komplizierten Werkzeug herzustellen ist und labil ist.

Aus der US 5 598 322 A1 ist eine Schnellbefestigung zum Aufschnappen eines elektrischen Installationsgerätes bekannt geworden, mit einer Ausnehmung an der Befestigungsfläche des elektrischen Installationsgerätes und mit einem federnd in die Ausnehmung gedrückten, aus Kunststoff bestehenden Schieber, der in aufgerasteten Zustand mit einer Nase hinter eine Längskante der Hutprofiltragschiene greift. Der Schieber weist einen langgestreckten Schieberkörper auf, an dessen parallel zur Bewegungsrichtung verlaufenden Seitenkanten in entgegengesetzte Richtungen und parallel zur Längserstreckung der Hutprofiltragschiene vorstehende federnde Arme angeformt sind, die in Gehäuseausnehmungen eingreifen und sich darin abstürzen und so den Schieber gegen die Hutprofiltragschiene drücken. Die federnde Armlänge und damit die Federkraft der federnde Arme ist dabei aus konstruktiven Gründen begrenzt. Auch könnte es vorkommen, dass der Schieber sich zu weit in die für die Aufnahme der Hutprofiltragschiene vorgesehene Aussparung bewegt, so dass dadurch das Aufschnappen des Installationsgerätes auf der Hutprofiltragschiene erschwert werden könnte.

Aufgabe der Erfindung ist es, eine Schnellbefestigung der eingangs genannten Art zu schaffen, bei der der Aufwand zur Herstellung und die Montage vereinfacht sind, bei optimaler Funktionsweise.

Diese Aufgabe wird erfindungsgemäß durch die Merkmale des Anspruchs 1 gelöst.

Gemäß dem kennzeichnenden Teil des Anspruchs 1 soll an dem Schieber eine Haltenase angebracht sein, die gegen einen Rücksprung am Installationsgerät zur Begrenzung der Bewegung nach innen im nicht montierten Zustand dient, und es sind beidseitig zu den Armen in den Schieberkörper eingreifende Vertiefungen vorgesehen, die die federnde Armlänge vergrößern.

Die federnden Arme können miteinander fluchten; es besteht auch die Möglichkeit, die Arme gegeneinander zu versetzen.

Weitere vorteilhafte Ausgestaltungen und Verbesserungen der Erfindung sind den weiteren Unteransprüchen zu entnehmen.

Anhand der Zeichnungen, in der ein Ausführungsbeispiel der Erfindung beschrieben ist, soll die Erfindung sowie weitere vorteilhafte Ausgestaltungen und

Verbesserungen der Erfindung näher erläutert und beschrieben werden.

Es zeigen:

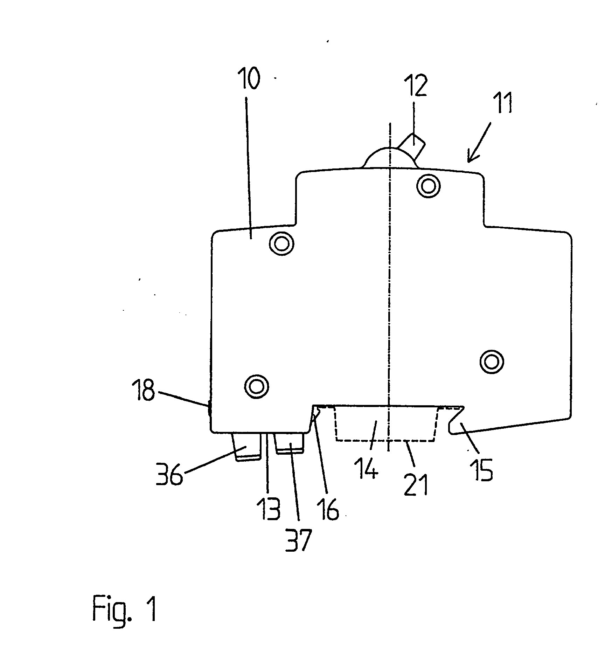

- Figur 1: eine Seitenansicht eines Leitungsschutzschalters,
- Figur 2: einen Teilbereich des Leitungsschutzschalters gemäß Figur 1, bei geöffnetem Gehäuse, und
- Figur 3: eine Schnittansicht gemäß Schnittlinie III-III der Figur 2,

Ein Leitungsschutzschalter 10 besitzt eine Frontseite 11, aus der ein Schaltknebel 12 herausragt. Auf der entgegengesetzten Seite befindet sich die Befestigungsfläche 13, die eine U-förmige Nut 14 aufweist, an deren einer Seitenwand eine feststehende

Nase 15 und an deren anderer Seitenwand eine bewegbare Nase 16 angeformt ist. diese in bewegbare Nase 16 ist federnd ins Innere der Ausnehmung gedrückt, so dass dann, wenn der Leitungsschutzschalter auf eine strichliiert dargestellte Hutprofiltragschiene 21 aufgeschnappt ist, sowohl die feststehende Nase 15 als auch die bewegliche Nase 16 hinter die benachbarten Längskanten der Hutprofiltragschiene 21 greifen.

Die bewegbare Nase 16 ist an einem Schieber 17 angeformt, der an dem der Nase 16 entgegengesetzten Ende eine Abkantung 18 von der Befestigungsfläche 13 weg aufweist, hinter die ein Werkzeug 19 greifen kann, um durch Abstützung gegen eine Wandung 20 den Schieber in Pfeilrichtung P von der Hutprofiltragschiene weg zu ziehen, so daß die bewegbare Nase 16 von der Hutprofiltragschiene 21 freikommt.

Der Schieber 17 besitzt einen länglich gestreckten Schieberkörper 17a aus Kunststoff, welcher zwischen einem Gehäuseunterteil 22 und einem Gehäuseoberteil 23, die durch eine Trennfuge 24 voneinander getrennt sind, angeordnet ist. Zu diesem Zweck besitzt das Gehäuse nicht näher dargestellte Gehäuseausnehmungen, die den Schieber in Pfeilrichtung P führen.

Beidseitig zu den Längskanten 25 und 26 des Schieberkörpers 17a sind federnde Arme 27 und 28 vorgesehen, wobei die federnde Länge der Arme 27 und 28 durch beidseitige Vertiefungen 29 und 30 vergrößert wird. Die Arme 27 und 28 sind gegeneinander versetzt und springen in entgegengesetzte Richtungen vor. Dabei befindet sich der Arm 28 näher an der Nase 16 als der Arm 27. Die Vertiefungen 29, 30 erstrecken sich bis zur Längssymmetrielinie M-M des Schieberkörpers 17a.

Die Arme 27 und 28 greifen jeweils seitlich in eine Ausnehmung 31 und 32 ein, wobei die Ausnehmung 31 an ihrer der Nase entfernt liegenden Wandung einen Absatz 33 und eine daran sich anschließende Schrägfläche 34 auf; die Ausnehmung 32 besitzt eine der Schrägfläche 34 entsprechende weitere Schrägfläche 35.

Der Absatz 33 und die Schrägflächen 34 und 35 sind so zu dem Schieber bemessen, daß die Arme 27 und 28 genau dann am Absatz 33 bzw. an der Schrägfläche 35 anliegen, wenn die Nase ins Innere der Ausnehmung gedrückt ist, so daß in dieser Stellung die federnden Arme 27 und 28 etwa entspannt sind.

Zur Montage des Leitungsschutzschalters 10 auf der Hutprofiltragschiene 21 wird die Nase 15 hinter die benachbarte Kante der Hutprofiltragschiene 21 gesetzt. Die andere Kante der Hutprofiltragschiene 21 gleitet auf der Schrägfläche 16a der Nase 16 auf und verrastet hinter einer Hinterschneidung 16b der Nase 16, wobei dadurch der Schieber um ein geringfügiges Maß in Pfeilrichtung P nach links gedrückt ist und die federnden Arme 28 und 27 gegen die Schrägfläche 35 bzw. gegen den Absatz 33 gedrückt sind.

Zur Demontage wird mittels des Werkzeuges 19 der Schieber weiter in Pfeilrichtung P verschoben, wobei die federnden Arme weiter verbogen werden und die Nase 16 von der benachbarten Kante der Hutprofiltragschiene 21 freikommt.

Der Leitungsschutzschalter gemäß den Zeichnungen besitzt an seiner Befestigungsfläche zwei senkrecht vorstehende Anschlußfahnen 36 und 37, die im montierten Zustand mit Gegenkontaktstücken in einer Verteilungsplatte in Eingriff gelangen; diese Anschlußfahnen sind beispielsweise aus der DE 196 28 957.2 A1 an sich bekannt.

Bei dem vorliegenden Leitungsschutzschalter 10 sind zwei Anschlußfahnen 36 und 37 vorgesehen, die hintereinander und bezogen auf eine Achse senkrecht zur Hutprofilschiene und in der Befestigungsfläche liegend in einem Abstand zueinander angeordnet sind, der so bemessen ist, daß der Schieber genau dazwischen paßt. Damit dient der Schieber 17 auch als Isolierung zwischen den Anschlußfahnen. Es besteht natürlich auch die Möglichkeit, den Schieber bei jeder Art von Leitungsschutzschaltern im Gehäuse unterzubringen.

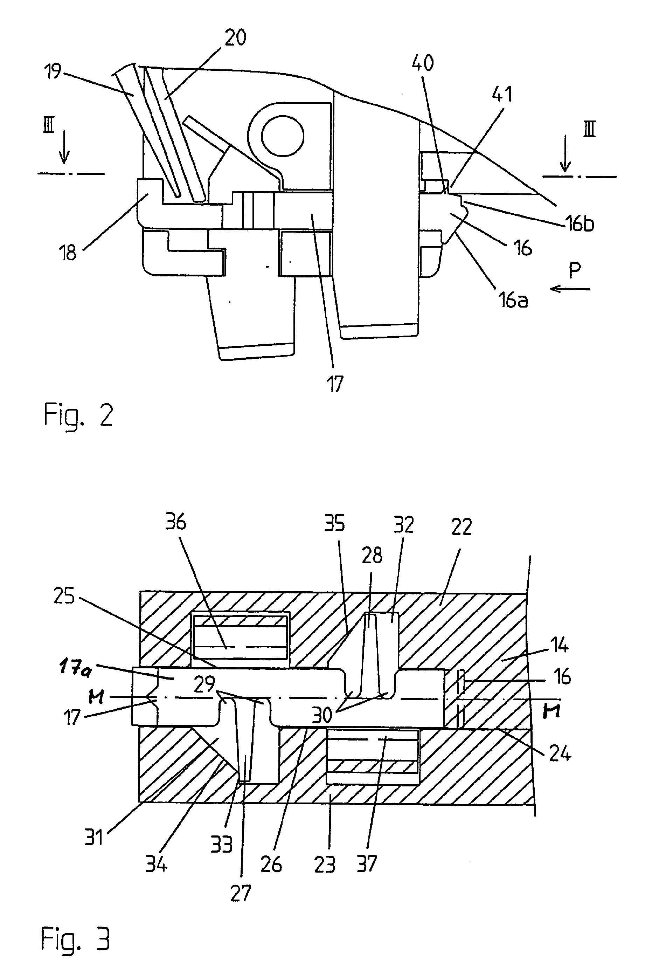

An der Fläche des Schiebers 17, die von der Befestigungsebene abgewandt ist, ist im Bereich der Nase eine Haltenase 40 vorgesehen, die sägezahnartig ausgebildet ist und in der in Fig. 2 dargestellten Stellung, also im nicht auf der Tragschiene 21 montierten Zustand, gegen einen Rücksprung 41 von den federnden Armen angedrückt wird, mit leichter Kraft, so daß der Schieber 17 nicht frei ins Innere der Ausnehmung 14 hineingleiten kann.

## Patentansprüche

1. Schnellbefestigung zum Aufschnappen eines elektrischen Installationsgerätes, insbesondere eines Leitungsschutzschalters auf eine Hutprofiltragschiene, mit einer Ausnehmung (14) an der Befestigungsfläche des elektrischen Installationsgerätes (10) und mit einem federnd in die Ausnehmung (14) gedrückten, aus Kunststoff bestehenden Schieber (17), der in aufgerastetem Zustand mit einer Nase (16) hinter eine Längskante der Hutprofiltragschiene greift, wobei der Schieber (17) einen lang gestreckten Schieberkörper aufweist, an dessen parallel zur Bewegungsrichtung verlaufenden Seitenkanten (25,26) in entgegengesetzte Richtungen und parallel zur Längserstreckung der Hutprofiltragschiene (14) vorstehende federnde Arme (27,28) angeformt sind, die in Gehäuseausnehmungen (31,32) eingreifen und sich darin abstützen und so den Schieber (17) gegen die Hutprofiltragschiene (21) drücken, **dadurch gekennzeichnet, dass** am Schieber (17) eine Haltenase (40) angeformt ist, die gegen einen Rücksprung (41) am Installationsgerät zur Begrenzung der Bewegung nach innen im nicht montierten Zustand dient, und dass am Schieber (17) beidseitig zu den Armen (27,28) in den Schieberkörper eingreifende Vertiefungen (29,30) vorgesehen sind, die die federnde Armlänge vergrößern.

2. Schnellbefestigung nach Anspruch 1, **dadurch gekennzeichnet, dass** die Arme (27,28) fluchten.

3. Schnellbefestigung nach Anspruch 1, **dadurch gekennzeichnet, dass** die Arme (27,28) gegeneinander versetzt sind und einen unterschiedlichen Abstand zur Hutprofiltragschiene (21) aufweisen.

4. Schnellbefestigung nach Anspruch 3, **dadurch gekennzeichnet, dass** die Vertiefungen (29,30) an der Längssymmetrieachse des Schieberkörpers enden.

5. Schnellbefestigung nach einem der vorherigen Ansprüche, **dadurch gekennzeichnet, dass** die Gehäuseausnehmung (31,32) Schrägflächen (34,35) aufweisen, auf die die freien Enden der Arme (27,28) beim Zurückziehen des Schiebers (17) von der Hutprofiltragschiene weg auflaufen.

6. Schnellbefestigung nach Anspruch 5, **dadurch gekennzeichnet, dass** wenigstens eine der Schrägflächen (34) einen Absatz (33) aufweist, der senkrecht zur Bewegungsrichtung des Schiebers (17) ausgerichtet ist und gegen den der benachbarte Arm (27) dann anliegt, wenn der Schieber frei nach innen gedrückt wird und damit die Arme (27,28) spannungsfrei sind.

## Claims

1. A snap mounting for snapping on an electric installation device, especially a miniature circuit breaker on a C-type mounting rail, comprising a recess (14) on the fastening surface of the electric installation device (10) and a slide (17) which is pressed resiliently into the recess (14), made of plastic and grips in the snapped state with a nose behind a longitudinal edge of the C-type mounting rail, with the slide (17) having an elongated slide body on which resilient arms (27, 28) are formed which protrude in opposite directions on their side edges (25, 26) extending parallel to the direction of movement and parallel to the longitudinal extension of the C-type mounting rail (14) and which engage in recesses (31, 32) in the housing and are supported therein and thus press the slide (17) against the C-type mounting rail (21), **characterized in that** a holding nose (40) is formed on the slide (17) which is used for limiting the inward movement in the non-mounted state against a setback (41) on the installation device, and that depressions (29, 30) are provided on the slide (17) on either side in relation to the arms (27, 28), which depressions engage in the slide body and enlarge the resilient arm length.

2. A snap mounting according to claim 1, **characterized in that** the arms (27, 28) are in alignment.

3. A snap mounting according to claim 1, **characterized in that** the arms (27, 28) are offset against one another and have a different distance to the C-type mounting rail (21).

4. A snap mounting according to claim 3, **characterized in that** the depressions (29, 30) end on the longitudinal axis of symmetry of the slide body.

5. A snap mounting according to one of the preceding claims, **characterized in that** the housing recesses (31, 32) comprise oblique surfaces (34, 35), onto which run the free ends of the arms (27, 28) during the withdrawal of the slide (17) from the C-type mounting rail.

6. A snap mounting according to claim 5, **characterized in that** at least one of the oblique surfaces (34) comprises on offset (33) which is aligned perpendicularly to the direction of movement of the slide (17), and the adjacent arm (27) rests on the same when the slide is pressed freely to the inside and the arms (27, 28) are thus free from tension.

## Revendications

1. Fixation rapide pour l'emboîtement d'un appareil d'installation électrique, en particulier d'un disjoncteur de protection de ligne, sur un rail de support à profilé oméga, avec une ouverture (14) sur la surface de fixation de l'appareil d'installation électrique (10) et avec un curseur (17) en plastique enfoncé de façon élastique dans l'ouverture (14), qui se met en prise dans l'état emboîté par un ergot (16) derrière un bord longitudinal du rail de support à profilé oméga, le curseur (17) présentant un corps de curseur allongé dont les bords latéraux (25, 26) parallèles au sens de déplacement portent formés d'un seul tenant des bras élastiques (27, 28) faisant saillie dans des directions opposées et parallèlement à l'extension longitudinale du rail de support à profilé oméga (14), qui se mettent en prise dans des ouvertures du boîtier (31, 32) et s'appuient dans celles-ci en pressant ainsi le curseur (17) contre le rail de support à profilé oméga (21), **caractérisée en ce qu'**il est prévu formé sur le curseur (17) un ergot de rétention (40) qui sert contre une saillie (41) de l'appareil d'installation à limiter le mouvement vers l'intérieur dans l'état non monté, et **en ce qu'**il est prévu sur le curseur (17) de part et d'autre des bras (27, 28) des creux (29, 30) s'enfonçant dans le corps du curseur qui augmentent la longueur élastique des bras.

2. Fixation rapide selon la revendication 1, **caractérisée en ce que** les bras (27, 28) sont alignés.

3. Fixation rapide selon la revendication 1, **caractérisée en ce que** les bras (27, 28) sont décalés l'un par rapport à l'autre et se trouvent à une distance différente du rail de support à profilé oméga (21).

4. Fixation rapide selon la revendication 3, **caractérisée en ce que** les creux (29, 30) finissent sur l'axe de symétrie longitudinale du corps de curseur.

5. Fixation rapide selon l'une des revendications précédentes, **caractérisée en ce que** l'ouverture du boîtier (31, 32) présente des surfaces obliques (34, 35) sur lesquelles passent les extrémités libres des bras (27, 28) lors du retrait du curseur (17) loin du rail de support à profilé oméga.

6. Fixation rapide selon la revendication 5, **caractérisée en ce qu'**au moins une des surfaces obliques (34) présente un décrochement (33) orienté perpendiculairement au sens de déplacement du curseur (17) et qui repose contre le bras voisin (27) quand le curseur est librement enfoncé vers l'intérieur et que les bras (27, 28) ne sont ainsi pas contraints.
